# EUROPÄISCHE PATENTSCHRIFT

(11) **EP 2 207 075 B1**
(45) Veröffentlichungstag und Bekanntmachung des Hinweises auf die Patenterteilung: **13.03.2019**
(21) Anmeldenummer: 09180888.1
(22) Anmeldetag: 29.12.2009
(51) Int. Cl.: G06F 1/16, G06F 3/041

(54) **Anordnung mit einer berührungssensitiven Eingabevorrichtung**
Assembly with a touch-sensitive input device
Ensemble avec un dispositif d'entrée sensible au contact

(30) Priorität: 07.01.2009 DE 102009003990
(43) Veröffentlichungstag der Anmeldung: 14.07.2010
(73) Patentinhaber: Wincor Nixdorf International GmbH, 33106 Paderborn (DE)
(72) Erfinder: Kulik, Mathias, 14774 Brandenburg (DE); Glagla, Mathias, 16761 Hennigsdorf (DE); Kirschke, Uwe, 13505 Berlin (DE)

(56) Entgegenhaltungen:
- WO-A1-98/29853
- WO-A2-2006/007390
- GB-A- 2 181 537
- US-A- 5 784 054
- US-B1- 6 677 934

## Beschreibung

Die Erfindung betrifft eine Anordnung mit einer Anzeigeeinheiit, einer Frontblende und einer berührungssensitiven Eingabevorrichtung mit einer Sensoranordnung zur Ermittlung der Position einer Berührung einer Scheibe.
Die erfindungsgemäße berührungssensitive Eingabevorrichtung wird insbesondere in Verbindung mit Selbstbedienterminals, Kassen und Geldautomaten verwendet und auch als Touchmodul bezeichnet. Ein solches Touchmodul umfasst zumindest eine transparente Scheibe und eine Sensoranordnung zur Ermittlung einer Berührung dieser Scheibe. Zusammen mit einer Anzeigeeinheit, insbesondere einem Bildschirm, bildet ein solches Touchmodul einen Touchscreen. Mit Hilfe eines solchen Touchscreens können Eingaben von einer Bedienperson für ein Computersystem, insbesondere für das Computersystem eines Selbstbedienungsgerätes, erfasst und das Selbstbedienungsgerät auf einfache Weise intuitiv gesteuert werden. Die Eingabe von Informationen und Befehlen erfolgt durch Berührung der Scheibe des Touchmoduls. Die Position der Berührung wird erfasst. Die Anzeigeeinheit ist hinter der Scheibe des Touchmoduls angeordnet und zeigt auswählbare Felder, denen Eingabefelder zugeordnet sind. Liegt die erfasste Position in einem solchen Eingabefeld wird eine dem Eingabefeld zugeordnete Funktion aktiviert. Die eingegebene Information bzw. der eingegebene Befehl kann dadurch eingegeben bzw. aktiviert werden.

Als Sensoranordnung zur Ermittlung der Position der Berührung der Scheibe des Touchmoduls können verschiedene Technologien zum Einsatz kommen. Eine der Technologien ist die sogenannte kapazitive Touchtechnologie. Bei ihr wird die Scheibe des Touchmoduls beispielweise mit einer durchsichtigen Metalloxydschicht beschichtet. Eine an den Ecken der Beschichtung angelegte Spannung erzeugt ein exakt gleichmäßiges elektrisches Feld. Es entsteht ein geringer Ladungstransport der in einem Entladezyklus in Form eines Stroms an den Ecken der Scheibe gemessen wird. Die resultierenden Ströme aus den Ecken stehen im direkten Verhältnis zu der Position, an der die Scheibe des Touchmoduls durch eine Bedienperson berührt wird.

Eine weitere Technologie zur Ermittlung der Position einer Berührung der Scheibe des Touchmoduls durch eine Bedienperson ist die sogenannte Infrarottouchtechnologie. Bei dieser Technologie wird mit Hilfe von Infrarotlicht sendenden Dioden ein Netz aus Infrarotstrahlen über der Scheibe des Touchmoduls erzeugt. Den Infrarotlicht sendenden Dioden gegenüberliegend sind Infrarotlicht detektierende Fotodioden vorgesehen, die ohne Unterbrechung der ausgesandten Infrarotstrahlen diese empfangen. Bei einer Berührung der Scheibe wird zumindest ein Teil der ausgesandten Infrarotstrahlen unterbrochen, so dass ein Teil der Fotodioden keine oder eine wesentlich geringere Infrarotstrahlung erfassen. Die Infrarotdioden und die Fotodioden sind in X-Richtung und in Y-Richtung der X-Y-Ebene der auf Berührung zu überwachenden Scheibenoberfläche angeordnet. Auf diese Weise können die X- und Y-Position der Berührung der Scheibe durch eine Bedienperson ermittelt werden.

Das Touchmodul kann einen Rahmen umfassen, der die Scheibe und die Sensoranordnung umschließt. Je nach verwendeter Touchtechnologie unterscheidet sich zwangsläufig auch der verwendete Rahmen. Nachteilig hieran ist, dass hierdurch zum Einen der logistische Aufwand zur Bereitstellung unterschiedlicher Rahmen erhöht wird und zum Anderen je nach verwendeten Rahmen das Touchmodul andere Maße und Anschlüsse aufweisen muss, so dass beispielweise bei Wartungsarbeiten beispielsweise an einem Selbstbedienungsterminal, wie einem Geldautomaten, ein Touchmodul mit einer Touchtechnologie nicht auf einfache Weise gegen ein Touchmodul mit einer anderen Touchtechnologie ausgetauscht werden kann.
Ein Einbaurahmen ist beispielsweise aus dem Dokument DE10025175A1 bekannt. Der dort beschriebene Einbaurahmen hat eine im Rahmen ausgebildete Öffnung, wobei wenigstens ein Teil einer berührungssensitiven Oberfläche eines Schirms freiliegt und der Einbaurahmen wenigstens einen Teil des Außenumfangs des Schirms abdeckt.
Aus dem Dokument WO 2006/007390 A2 ist ein Touchscreensystem bekannt, bei dem ein Rahmen vorgesehen ist, der eine Vertiefung aufweist, in der unterschiedliche Sensortechnologien wahlweise aufnehmbar sind.
Das Dokument US 6,677,934 B1 offenbart einen Touchscreen, bei dem eine Infrarotsensoranordnung auf einem Sensorträgerrahmen angeordnet ist, der innerhalb eines Rahmens des Touchscreens aufgenommen ist. Der Sensorträgerrahmen und der Rahmen des Touchscreens sind hierbei an eine Montageplatte befestigt. Weitere Touchscreens, bei denen die Sensoranordnungen innerhalb einer Vertiefung eines Rahmens aufgenommen sind, sind aus den Dokumenten GB 2 181 537 A und US 5,784,054 A bekannt.
Aufgabe der Erfindung ist es, eine Anordnung mit einer Anzeigeeinheit, einer Frontblende und einer berührungssensitiven Eingabevorrichtung anzugeben, die einfach und kompakt aufgebaut ist und die für mehrere Sensortechnologien zur berührungssensitiven Eingabe geeignet ist.
Diese Aufgabe wird durch eine Anordnung mit den Merkmalen des Patentanspruches 1 gelöst. Vorteilhafte Weiterbildungen der Erfindung sind in den abhängigen Patentansprüchen angegeben.

Gemäß der Erfindung umfasst die berührungssensitive Eingabevorrichtung einen eine Öffnung aufweisenden Rahmen, eine Scheibe und eine Sensoranordnung zur Ermittlung einer Berührung der Scheibe durch eine Bedienperson. Der Rahmen hat ein Profil mit einem der Öffnung zugewandten Schenkel, einen der Öffnung abgewandten Schenkel und einem die beiden Schenkel verbindenden Grundsegment. Die Scheibe kontaktiert den der Öffnung zugewandten Schenkel. Durch den der Öffnung zugewandten Schenkel, den der Öffnung abgewandten Schenkel und das Grundsegment wird eine Vertiefung, insbesondere eine nutförmige Vertiefung, gebildet, in der zumindest ein Teil der Sensoranordnung anordenbar ist. Hierdurch wird erreicht, dass in ein und demselben Rahmen verschiedene Sensoranordnungen und auch Scheiben mit unterschiedlichen Abmessungen anordenbar sind. Auf diese Weise kann der Rahmen unabhängig von der verwendeten Sensoranordnung verwendet werden. Hierdurch kann die Anzahl der vorzuhaltenden Bauteile, insbesondere der vorzuhaltenden Rahmen und der vorzuhaltenden Touchmodule, reduziert werden, wodurch der logistische Aufwand und die hiermit verbundenen Kosten gesenkt werden. Da keine konstruktiven Änderungen an dem Rahmen vorzunehmen sind, werden auch die Bearbeitungszeit und die Werkzeugkosten verringert. Darüber hinaus wird erreicht, dass die berührungssensitive Eingabevorrichtung unabhängig von der verwendeten Sensoranordnung immer in etwa die gleichen Abmessungen hat, so dass sie auf einfache Weise in die verschiedensten Geräte integriert werden kann. Des Weiteren können in ein Gerät alternativ mit verschiedenen Sensoranordnungen ausgestattete berührungssensitive Eingabevorrichtungen integriert werden, ohne dass konstruktive Änderungen an dem Gerät notwendig sind.

Vorzugsweise ist der Rahmen umlaufend ausgebildet. Auf diese Weise kann die berührungssensitive Eingabevorrichtung auf einfache Weise eigenständig gehandhabt werden. Dies ermöglicht eine vielseitige Verwendung der berührungssensitiven Eingabevorrichtung. Es ist besonders vorteilhaft, wenn der Rahmen ein Gehäuse für die Scheibe und die Sensoranordnung bildet oder mit einem Blendenrahmen verbindbar ist.

Darüber hinaus ist es vorteilhaft, wenn zwischen dem der Öffnung zugewandten Schenkel und dem Grundsegment ein stumpfer Winkel ist. Es ist besonders vorteilhaft, wenn der der Öffnung zugewandte Schenkel kürzer ist als der der Öffnung abgewandte Schenkel und an dem dem Grundsegment entgegengesetzten Ende des der Öffnung zugewandten Schenkels ein parallel zum Grundsegment angeordnetes Kontaktsegment vorgesehen ist. Dieses Kontaktsegment kontaktiert die Scheibe. Durch das Kontaktsegment wird eine größere Kontaktfläche zwischen dem Rahmen und der Scheibe erzeugt. Hierdurch wird die Verwendung unterschiedlich großer Scheiben ermöglicht. Des Weiteren wird durch eine solche große Kontaktfläche das Eindringen von Staub und/oder Feuchtigkeit erschwert. Bei einer besonders vorteilhaften Ausführungsform der Erfindung ist der Abstand des dem Grundsegment entgegengesetzten Endes des der Öffnung abgewandten Schenkels zum Grundsegment und der Abstand der dem Kontaktsegment abgewandten Oberfläche der Scheibe zu dem Grundsegment identisch. Auf diese Weise wird ein glatter Abschluss der Eingabevorrichtung erreicht, so dass an der dem Grundsegment abgewandten Seite auf einfache Weise mindestens eine weitere Baugruppe, insbesondere ein Bildschirm, anordenbar ist.

Des Weiteren ist es vorteilhaft, wenn die Sensoranordnung mindestens eine Infrarotsensoranordnung umfasst und zumindest ein Teil der von einem Infrarotlichtsender der Infrarotsensoranordnung ausgesandten und einem Infrarotlichtempfänger der Infrarotsensoranordnung empfangenen Infrarotstrahlung bei Berühren einer Berührungsoberfläche der Scheibe unterbrochen wird. Die Berührungsoberfläche ist diejenige Oberfläche der Scheibe, an der der Öffnung zugewandte Schenkel des Rahmens die Scheibe kontaktiert und die einem Benutzer der berührungssensitiven Eingabevorrichtung zugewandt ist. Mit Hilfe einer solchen Infrarotsensoranordnung kann die Position der Berührung der Scheibe auf einfache Weise ermittelt werden. Hierzu sind die Infrarotlichtsender derart angeordnet, dass über der Scheibe ein Netz aus Infrarotstrahlen erzeugt wird, wobei die Infrarotstrahlen von Infrarotlichtempfängern empfangen werden. Je nach Position der Berührung der Berührungsoberfläche der Scheibe wird zumindest ein Teil der Infrarotstrahlen unterbrochen und abhängig hiervon die Position der Berührung der Scheibe ermittelt. Die Infrarotlichtsender und die Infrarotlichtempfänger sind vorzugsweise in X-Richtung und in Y-Richtung der X-Y-Ebene der auf Berührung zu überwachenden Scheibenoberfläche angeordnet. Auf diese Weise können die X- und Y-Position der Berührung der Scheibe durch eine Bedienperson ermittelt werden.

Vorzugsweise umfasst die Sensoranordnung eine Vielzahl von Infrarotsensorelementen. Die Infrarotsensorelemente sind auf einem Sensorträgerrahmen angeordnet. Zumindest die Infrarotsensorelemente sind innerhalb der Vertiefung des Rahmens angeordnet. Auf diese Weise wird eine kompakte Bauform der berührungssensitiven Eingabevorrichtung erreicht. Bei dem Sensorträgerrahmen handelt es sich insbesondere um einen Leiterplattenrahmen. Die Infrarotsensorelemente können beispielweise die Infrarotlichtsender und Infrarotlichtempfänger, insbesondere Infrarotdioden und Fotodioden, sein.

Der Sensorträgerrahmen ist vorteilhafterweise zwischen dem der Öffnung abgewandten Schenkels des Rahmens und der Scheibe angeordnet. Auf diese Weise wird die Scheibe positioniert und ein Verrutschen der Scheibe innerhalb der durch die Scheibe gebildeten Ebene verhindert bzw. minimiert.

Es ist vorteilhaft, wenn zumindest der der Öffnung zugewandte Schenkel des Rahmens, vorzugsweise der gesamte Rahmen, aus einem infrarotstrahlendurchlässigen Material, insbesondere einem infrarotstrahlendurchlässigen Kunststoff, gefertigt ist. Auf diese Weise kann die von den in der Vertiefung des Rahmens angeordneten Infrarotlichtsendern ausgestrahlte Infrarotstrahlung durch den der Öffnung zugewandten Schenkel und auf der gegenüberliegenden Seite durch den gegenüberliegenden der Öffnung zugewandten Schenkel des Rahmens hindurchstrahlen und die dort angeordneten Infrarotlichtempfänger erreichen und somit das Netz aus Infrarotstrahlung über der Berührungsoberfläche der Scheibe herstellen. Es ist besonders vorteilhaft, den gesamten Rahmen aus einem infrarotstrahlungsdurchlässigen Material zu fertigen, da auf diese Weise der Fertigungsprozess vereinfacht wird und die Kosten reduziert werden. Ferner wird das Recycling des Rahmens vereinfacht.

Alternativ kann der Rahmen auch aus einem nicht infrarotstrahlungsdurchlässigen Material gefertigt werden und der der Öffnung zugewandte Schenkel an den Stellen, an denen die Infrarotlichtsender und Infrarotlichtempfänger innerhalb der Vertiefung angeordnet sind, Durchlassöffnungen aufweisen, durch die die Infrarotstrahlung durch den der Öffnung zugewandten Schenkel hindurchgehen kann.

Bei einer alternativen Ausführungsform der Erfindung umfasst die Sensoranordnung mindestens ein Piezoelement zur Erfassung von durch eine Berührung der Scheibe erzeugten Schallwellen. Vorzugsweise ist eine Vielzahl von Piezoelementen vorgesehen, die an der dem der Öffnung abgewandten Schenkel zugewandten Seite der Scheibe angeordnet sind. Bei einer Berührung der Scheibe wird eine Schallwelle erzeugt. Abhängig von der Position der Berührung der Scheibe wird von den verschiedenen Piezoelementen der Schall nach unterschiedlichen Zeitspannen nach der Berührung empfangen, und hieraus die Position der Berührung der Scheibe durch eine Bedienperson bestimmt.

Bei einer weiteren alternativen Ausführungsform der Erfindung hat die Sensoranordnung mehrere auf der Scheibe aufgedampfte Elektroden oder eine auf der Scheibe aufgebrachte Metalloxydschicht. Bei Berührung der Berührungsoberfläche der Scheibe wird ein elektrisches Signal ausgesandt. Abhängig von der Position der Berührung der Scheibe wird an den Ecken der Scheibe ein unterschiedlich starker Stromfluss gemessen.

Es ist besonders vorteilhaft, wenn innerhalb der Vertiefung des Rahmens zumindest auf einem Sensorträgerrahmen angeordnete Infrarotsensorelemente anordenbar sind und mindestens ein Piezoelement zwischen dem der Öffnung abgewandten Schenkel des Rahmens und der diesem Schenkel zugewandten Seite der Scheibe anordenbar ist und eine Scheibe, auf der Elektroden oder eine Metalloxydschicht aufgebracht sind, derart anordenbar ist, dass diese Scheibe zumindest den der Öffnung zugewandten Schenkel kontaktiert. Auf diese Weise wird erreicht, dass in ein und demselben Rahmen zumindest eine Infrarottouchtechnologie, eine kapazitive Touchtechnologie und eine akustische Touchtechnologie integrierbar sind. Bei ein besonders vorteilhaften Ausführungsform der Erfindung ist zusätzlich auch eine resistive Touchtechnologie integrierbar.

Gemäß der Erfindung ist eine Dichtung vorgesehen, die zumindest die Scheibe und den der Öffnung abgewandten Schenkel kontaktiert und die Öffnung der Vertiefung zumindest staub- und/oder feuchtigkeitsdicht verschließt. Auf diese Weise kann auf weitere Dichtungselemente verzichtet werden und die Montage des Touchmoduls wird vereinfacht.
Es ist vorteilhaft, wenn der Rahmen mindestens ein Positionierelement zur Positionierung und/oder Befestigung der Scheibe umfasst. Bei diesen Positionierelementen handelt es sich vorzugsweise um eine umlaufende oder einseitige Erhebung auf der der Scheibe zugewandten Seite des Kontaktsegments. Hierdurch wird trotz der Verwendung von Scheiben unterschiedlicher Abmessungen eine genaue Positionierung der Scheibe erreicht.

Gemäß der Erfindung sind innerhalb der Vertiefung des Rahmens mehrere Erhebungen ausgebildet, mit deren Hilfe die Scheibe und/oder die Sensoranordnung auf Abstand zum Grundsegment gehalten werden. Mit Hilfe dieser Erhebungen wird insbesondere der Sensorträgerrahmen einer Infrarotsensoranordnung auf Abstand zum Grundsegment gehalten, so dass die Infrarotsensorelemente, die auf dem Sensorträgerrahmen angeordnet sind, in der Vertiefung anordenbar sind, ohne mit dem Grundsegment in Kontakt zu kommen. Dadurch ist eine einfache Positionierung und Fixierung von weiteren Bauelementen und Baugruppen möglich. Bei der Verwendung einer Scheibe mit einer Metalloxydschicht bzw. aufgedampften Elektroden wird durch die Erhebungen eine zusätzliche Kontaktfläche neben der durch das Kontaktsegment gebildeten Kontaktfläche erreicht, wodurch eine noch stabilere Positionierung der Scheibe möglich ist.
Weitere Merkmale und Vorteile der Erfindung ergeben sich aus der folgenden Beschreibung, welche in Verbindung mit den beigefügten Figuren die Erfindung anhand von Ausführungsbeispielen näher erläutert.
Es zeigen:
- Figur 1: eine schematische perspektivische Darstellung der Innenseite eines Rahmens einer berührungssensitiven Eingabevorrichtung;
- Figur 2: eine schematische perspektivische Darstellung der Innenseite einer berührungssensitiven Eingabevorrichtung mit einer kapazitiven Sensoranordnung;
- Figur 3: einen Ausschnitt eines Schnittes durch die berührungssensitive Eingabevorrichtung nach Figur 2;
- Figur 4: eine schematische perspektivische Darstellung der Innenseite einer berührungssensitiven Eingabevorrichtung mit einer Infrarotsensoranordnung;
- Figur 5: einen Ausschnitt eines Schnittes durch die berührungssensitive Eingabevorrichtung nach Figur 4;
- Figur 6: eine schematische perspektivische Darstellung der Innenseite einer berührungssensitiven Vorrichtung mit einer akustischen Sensoranordnung;
- Figur 7: eine schematische perspektivische Ansicht der Innenseite einer berührungssensitiven Vorrichtung mit einer Dichtung;

- Figur 8: eine weitere schematische perspektivische Darstellung der Innenseite der berührungssensitiven Vorrichtung nach Figur 7;
- Figur 9: eine schematische perspektivische Darstellung der Außenseite einer berührungssensitiven Eingabevorrichtung nach den Figuren 7 und 8;
- Figur 10: eine schematische perspektivische Darstellung der Außenseite und der Innenseite einer berührungssensitiven Eingabevorrichtung nach den Figuren 7 bis 9 mit einer Frontblende; und
- Figur 11: eine schematische perspektivische Darstellung einer berührungssensitiven Eingabevorrichtung und einer mit der berührungssensitiven Eingabevorrichtung verbundenen Anzeigeeinheit.

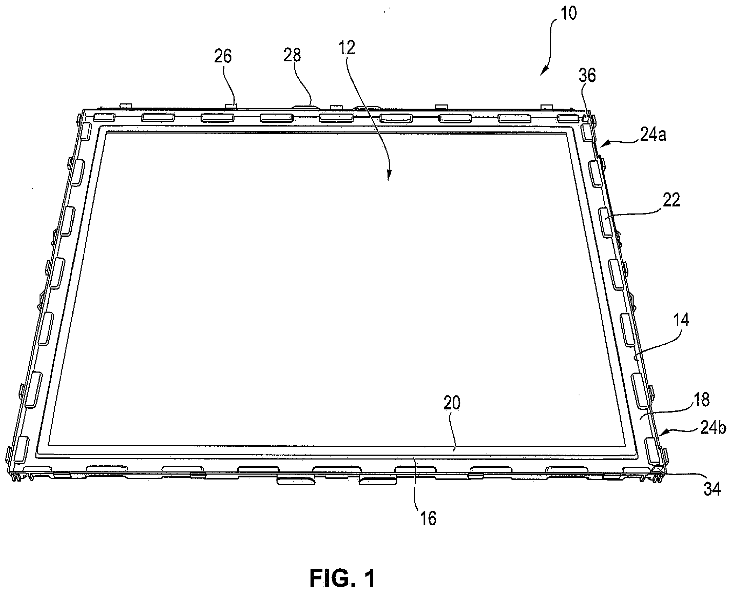

In Figur 1 ist eine perspektivische schematische Darstellung der Innenseite eines Rahmens 10 einer berührungssensitiven Eingabevorrichtung gemäß einer ersten Ausführungsform der Erfindung gezeigt. Die berührungssensitive Eingabevorrichtung wird im Folgenden auch als Touchmodul bezeichnet.

Neben dem Rahmen 10 umfasst das Touchmodul zumindest eine nicht dargestellte Scheibe und eine ebenfalls nicht dargestellte Sensoranordnung. Die Innenseite des Touchmoduls ist diejenige Seite, die beim Einbau des Touchmoduls in ein Gerät, insbesondere ein Selbstbedienungsterminal, eine Kasse oder einen Geldautomaten, vom Benutzer abgewandt ist, und somit dem Inneren des Gerätes zugewandt ist.

Der Rahmen 10 hat ein Profil mit einer im Wesentlichen U-förmigen Grundform. Der Rahmen ist umlaufend ausgebildet und somit geschlossen. Ferner hat der Rahmen 10 eine Öffnung 12. Das Profil des Rahmens 10 umfasst einen der Öffnung 12 abgewandten Schenkel 14 und einen der Öffnung 12 zugewandten Schenkel 16. Der der Öffnung 12 abgewandte Schenkel 14 und der der Öffnung 12 zugewandte Schenkel 16 sind über ein Grundsegment 18 miteinander verbunden. Ferner ist an dem dem Grundsegment 18 abgewandten Ende des der Öffnung 12 zugewandten Schenkels 16 ein Kontaktsegment 20 angeordnet. Das Kontaktsegment 20 ist vorzugsweise parallel zum Grundsegment 18 angeordnet. Der der Öffnung 12 abgewandte Schenkel 14 und das Grundsegment 18 sind orthogonal zueinander angeordnet. Alternativ kann zwischen dem der Öffnung 12 abgewandten Schenkel 14 und dem Grundsegment 18 auch ein spitzer oder stumpfer Winkel sein. Zwischen dem der Öffnung 12 zugewandten Schenkel 16 des Rahmens 10 und dem Grundsegment 18 ist vorzugsweise ein stumpfer Winkel. Alternativ kann zwischen dem der Öffnung 12 zugewandten Schenkel 16 und dem Grundsegment 18 auch ein spitzer oder rechter Winkel sein. Der Rahmen 10 ist derart ausgebildet, dass der Abstand des von dem Grundsegment 18 abgewandten Endes des der Öffnung 12 abgewandten Schenkels 14 zum Grundsegment 18 größer ist als der Abstand der dem Grundsegment 18 abgewandten Seite des Kontaktsegmentes 20 zum Grundsegment 18.

Durch die beiden Schenkel 14, 16, das Grundsegment 18 und das Kontaktsegment 20 wird eine Vertiefung gebildet. Diese Vertiefung wird im Folgenden auch als Nut bezeichnet. Innerhalb dieser Nut ist eine Vielzahl von Erhebungen vorgesehen. Eine dieser Erhebungen ist beispielhaft mit dem Bezugszeichen 22 bezeichnet. Der Abstand jeweils zweier benachbarter Erhebungen 22 ist vorzugsweise jeweils gleich. Insbesondere ist die Länge einer Erhebung 22 genauso groß wie der Abstand zwischen zwei benachbarten Erhebungen 22. Die Erhebungen 22 sind vorzugsweise derart ausgebildet, dass ihre Höhe gleich dem Abstand zwischen der dem Grundsegment 18 abgewandten Seite des Kontaktsegments 20 und dem Grundsegment 18 ist.

Der der Öffnung 12 abgewandte Schenkel 14 hat zwei Aussparungen 24a, 24b, über die Anschlüsse einer innerhalb der Nut und/oder auf einer mit dem Rahmen 12 in Kontakt stehenden Scheibe angeordneten Sensoranordnung nach außen geführt werden können.

Des Weiteren sind an der der Öffnung 12 abgewandten Seite des der Öffnung 12 abgewandten Schenkels 14 eine Vielzahl kleiner Klemmelemente und einige größere Klemmelemente angeordnet. Eines der kleinen Klemmelemente ist beispielhaft mit dem Bezugszeichen 26 bezeichnet, eines der großen Klemmelemente ist beispielhaft mit dem Bezugszeichen 28 bezeichnet. Die kleinen Klemmelemente 26 und die großen Klemmelemente 28 sind derart ausgebildet, dass zumindest ein Teil eines jeden kleinen Klemmelements 26 und ein Teil jedes größeren Klemmelements 28 über das dem Grundsegment 18 abgewandte Ende des der Öffnung 12 abgewandten Schenkels 14 hinausragt.

Der Rahmen 10 ist derart ausgebildet, dass in ihm, wie im Folgenden beschrieben, zumindest eine kapazitive Sensoranordnung, eine Infrarotsensoranordnung und eine akustische Sensoranordnung anordenbar ist.

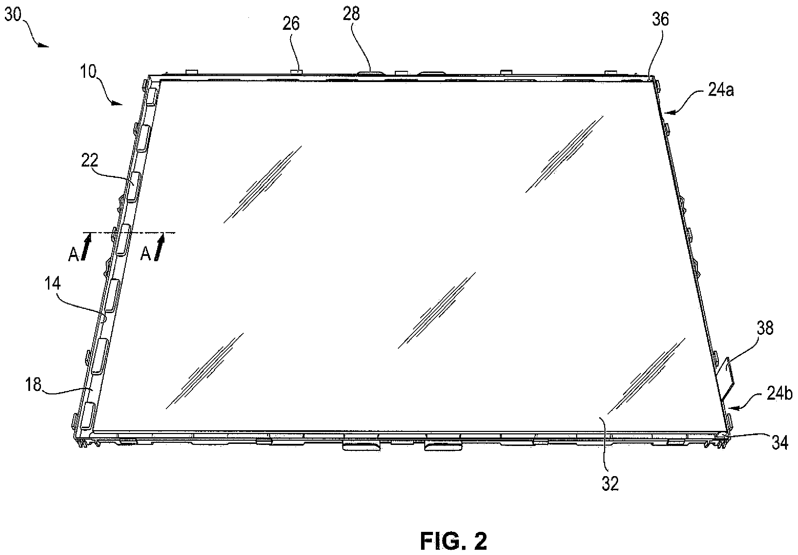

In Figur 2 ist eine schematische perspektivische Darstellung der Innenseite eines Touchmoduls 30 mit einer kapazitiven Sensoranordnung gezeigt. Elemente mit gleichem Aufbau oder gleicher Funktion haben dieselben Bezugszeichen.

Innerhalb des Rahmens 10 ist eine Scheibe 32 derart angeordnet, dass durch sie die gesamte Öffnung 12 verdeckt wird und die Scheibe 32 mit einer Berührungsoberfläche das Kontaktsegment 20 kontaktiert. Die Berührungsoberfläche ist einem Benutzer des Touchmoduls 30 zugewandt und in Richtung der Außenseite des Rahmens 10 gerichtet. Die Scheibe 32 ist zumindest teilweise, vorzugsweise vollständig, transparent. Die Scheibe 32 ist insbesondere aus Glas oder Kunststoff gefertigt.

Die Scheibe 32 ist derart innerhalb des Rahmens 10 positioniert, dass die Scheibe 32 an der die Aussparungen 24a, 24b aufweisenden Seite des Rahmens 10 bündig an die der Öffnung 12 zugewandten Seite des der Öffnung 12 abgewandten Schenkels 14 anliegt und an der der die Aussparung 24a, 24b aufweisenden Seite des Rahmens 10 entgegengesetzten Seite des Rahmens 10 die Erhebungen 22 nicht kontaktiert. An der die Aussparung 24a, 24b aufweisenden Seite des Rahmens 10 kontaktiert die Scheibe 32 mit ihrer Berührungsoberfläche sowohl das Kontaktsegment 20 als auch die an dieser Seite des Rahmens 10 angeordneten Erhebungen 22.

Die Positionierung der Scheibe 32 in Bezug auf die anderen beiden Seiten des Rahmens 10 wird durch zwei Positionierelemente 34, 36 erreicht. Die Positionierelemente 34, 36 sind derart angeordnet, dass der Abstand der Positionierelemente 34, 36 und somit auch der an den Positionierelementen 34, 36 anliegenden Kanten der Scheibe 32 zu dem der Öffnung 12 abgewandten Schenkel 14 des Rahmens 10 gleich ist. Ferner verhindern die Positionierelemente 34, 36 ein Verschieben der Scheibe 32.

Auf der Berührungsoberfläche der Scheibe 32 sind eine Vielzahl Elektroden und/oder eine durchsichtige Metalloxydschicht aufgebracht, insbesondere aufgedampft. Eine an den Ecken der Beschichtung angelegte Spannung erzeugt ein exaktes, gleichmäßiges elektrisches Feld. Es besteht ein geringer Ladungstransport, der in Form eines Stroms an den Kanten der Scheibe 32 gemessen wird. Die an den Kanten gemessenen Ströme stehen im direkten Verhältnis zu der Position an der die Berührungsoberfläche der Scheibe 32 von einer Bedienperson mit einem Finger oder einer Eingabehilfe berührt wird. Auf diese Weise kann die Position der durch die Bedienperson vollzogenen Berührung der Berührungsoberfläche der Scheibe 32 auf einfache Weise ermittelt werden. Mit Hilfe des Anschlusselements 38 werden diese Ströme bzw. aus diesen Strömen gewonnenen Informationen an eine Verarbeitungseinheit übertragen. Das Anschlusselement 38 ist fest mit der Scheibe 32 verbunden, und derart an der dem der Öffnung 12 abgewandten Schenkels 14 zugewandten Seite der Scheibe 12 angeordnet, dass das Anschlusselement 38 zumindest teilweise innerhalb der Aussparung 24b angeordnet ist. Die Verarbeitungseinheit ermittelt aus den Strömen bzw. den aus den Strömen gewonnen Informationen die Position der Berührung der Scheibe 32.

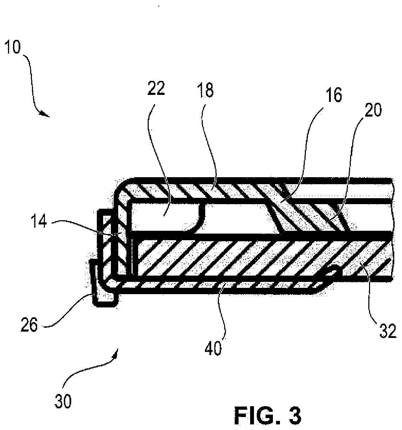

In Figur 3 ist einen Schnitt durch einen Ausschnitts des Touchmoduls 30 nach Figur 2 entlang der Schnittlinie A-A gezeigt. Der Rahmen 10 und die Scheibe 32 sind vorteilhafterweise derart ausgebildet, dass der Abstand des dem Grundsegment 18 entgegengesetzten Endes des der Öffnung 12 abgewandten Schenkels 14 zum Grundsegment 18 und der Abstand der der Berührungsoberfläche entgegengesetzten Oberfläche der Scheibe 32 zum Grundsegment 18 gleich sind. Auf diese Weise wird ein ebener Abschluss der Innenseite gebildet, so dass auf einfache Weise weitere Bauteile auf der Innenseite des Tochmoduls 30 anordenbar sind. Ein solches Bauteil kann beispielsweise eine Dichtung 40 sein.

Die der Nut zugewandte Seite des der Öffnung 12 zugewandten Schenkels 16 und des Kontaktsegments 20 sind parallel zu der der Nut abgewandten Seite des der Öffnung 12 zugewandten Schenkels 16 und des Kontaktsegments 20.

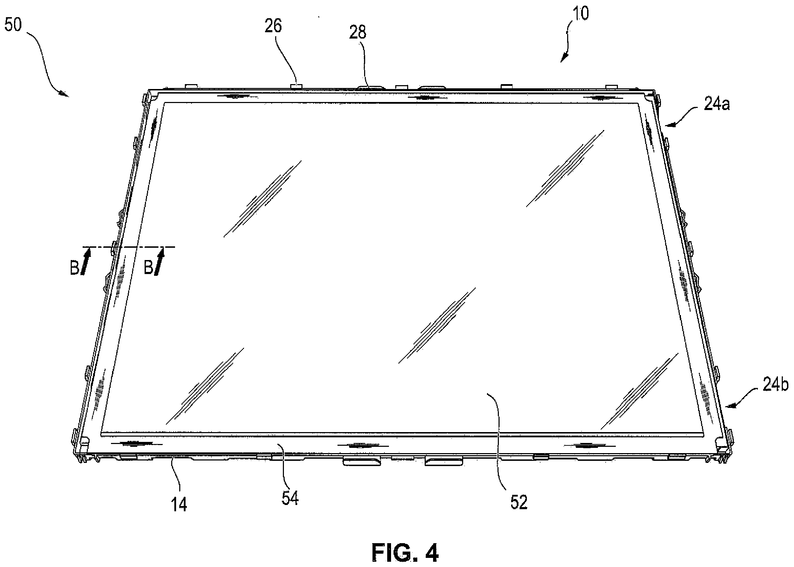

In Figur 4 ist eine perspektivische schematische Darstellung der Innenseite eines Touchmoduls 50 mit einer Infrarotsensoranordnung gemäß einer zweiten Ausführungsform der Erfindung dargestellt. In den Rahmen 10 ist mittig eine Scheibe 52 eingesetzt, die die Öffnung 12 des Rahmens 10 vollständig bedeckt. Die Scheibe 52 ist vorzugsweise aus Glas oder Kunststoff hergestellt und dient hauptsächlich dem Schutz von hinter der der Berührungsoberfläche entgegengesetzten Oberfläche der Scheibe 52 angeordneten Bauteilen, insbesondere einer hinter der Scheibe 52 angeordneten Anzeigeeinheit.
Die Infrarotsensoranordnung umfasst einen Sensorträgerrahmen 54. Der Sensorträgerrahmen 54 ist vorzugsweise eine Leiterplatte mit einer rahmenförmigen Form oder mehrerer Leiterplattensegmente, die als im Wesentlichen umlaufender Rahmen angeordnet sind. Der Sensorträgerrahmen 54 ist derart dimensioniert, dass seine äußere Kante an allen vier Seiten die der Öffnung 12 zugewandte Seite des der Öffnung 12 abgewandten Schenkels 14 kontaktiert oder zwischen dem Schenkel 14 und der äußeren Kante des Sensorträgerrahmens 54 nur ein kleiner Spalt verbleibt. Die Scheibe 52 ist derart dimensioniert, dass sie bündig in der Öffnung des Sensorträgerrahmens 54 anordenbar ist. Auf diese Weise dient der Sensorträgerrahmen 54 als Positionierhilfe und Aufnahmeelement für die Scheibe 52. Der Sensorträgerrahmen 54 kontaktiert mit der dem Grundsegment 18 zugewandten Seite die Erhebungen 22 des Rahmens 10.

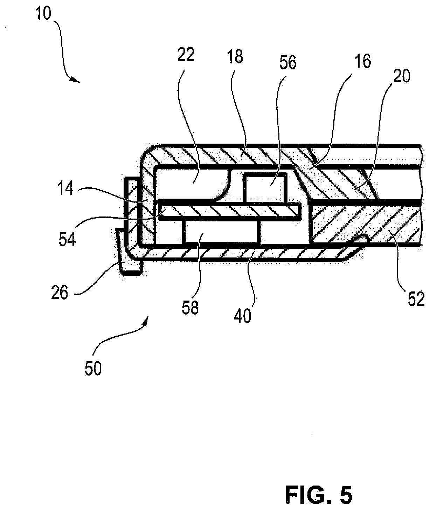

In Figur 5 ist ein Ausschnitt eines Schnitts durch das Touchmodul 50 nach Figur 4 entlang der Schnittlinie B-B gezeigt. Die Scheibe 52 ist derart dimensioniert, dass ihre Kante bündig mit der dem der Öffnung 12 abgewandten Schenkel 14 zugewandten Seite des Kontaktsegments 20 abschließt. Ferner ist die Scheibe 52 derart ausgebildet, dass der Abstand der vom Grundsegment 18 abgewandten Seite der Scheibe 52 zum Grundsegment 18 und der Abstand des dem Grundsegment 18 abgewandten Endes des der Öffnung 12 abgewandten Schenkels 14 zum Grundsegment 18 gleich sind.

Die dem Grundsegment 18 zugewandte Oberfläche des Sensorträgerrahmens 54 und die Berührungsoberfläche der Scheibe 52 liegen näherungsweise in einer Ebene. Auf der dem Grundsegment 18 zugewandten Oberfläche des Sensorträgerrahmens 54 sind eine Vielzahl von Infrarotsende- und Infrarotempfangsdioden angeordnet, die im Folgenden kurz als Infrarotdioden bezeichnet werden. Eine dieser Infrarotdioden ist beispielhaft mit dem Bezugszeichen 56 bezeichnet. Die Infrarotdioden 56 sind elektrisch leitend mit den Leiterbahnen des Sensorträgerrahmens 54 verbunden.

Die Infrarotdioden 56 sind somit innerhalb der Nut des Rahmens 10 angeordnet und somit durch den Rahmen 10 vor Vandalismus und Verschmutzungen, insbesondere vor Staub, geschützt. Der Rahmen 10 ist aus einem infrarotstrahlungsdurchlässigen Material, insbesondere einem infrarotstrahlungsdurchlässigen Kunststoff, gefertigt. In einer alternativen Ausführungsform der Erfindung kann auch nur der der Öffnung 12 zugewandte Schenkel 16 und das Kontaktsegment 20 aus einem infrarotstrahlungsdurchlässigen Material gefertigt sein.

Von den Infrarotdioden 56 werden Infrarotstrahlen in Richtung des der Öffnung 12 zugewandten Schenkels 16 emittiert. Die Infrarotstrahlen treten durch den infrarotstrahlungsdurchlässigen, der Öffnung 12 zugewandten Schenkel 16 und durch das Kontaktsegment 20 durch. Die durch die Infrarotsendedioden ausgesandten Infrarotstrahlen werden mit Hilfe von Infrarotempfangsdioden, insbesondere von infrarotstrahlungsempfindlichen Fotodioden, empfangen. Die Infrarotsende- und die Infrarotempfangsdioden können einteilig ausgebildet sein. Eine Infrarotempfangsdiode und eine Infrarotsendediode werden zusammen auch als Infrarotsensor bezeichnet. Mit Hilfe der Infrarotdioden wird ein Netz aus Infrarotstrahlen über der Berührungsoberfläche der Scheibe 52 gebildet. Berührt ein Benutzer die Berührungsoberfläche der Scheibe 52 so wird zumindest ein Teil der durch die Infrarotdioden 56 ausgesandten und zumindest ohne Berührung der Scheibe durch die Infrarotempfangsdioden empfangenen Infrarotstrahlen unterbrochen. Welcher Teil der Infrarotstrahlen unterbrochen wird, hängt von der Position ab, an der die Scheibe 52 berührt wird. Auf diese Weise kann die Position der Berührung der Scheibe 52 bestimmt werden. Zum Unterbrechen der Infrarotstrahlung ist es nicht notwendig, die Scheibe 52 tatsächlich zu berühren oder gar Druck auf die Scheibe auszuüben. Somit können auch nur annähernde Berührungen der Scheibe 52 durch das Touchmodul 50 ermittelt werden, wenn dadurch zumindest ein Teil der ausgesandten Infrarotstrahlen unterbrochen wird und vom den Infrarotempfangsdioden nicht mehr empfangen wird. Das durch die Infrarotdioden 56 erzeugte Netz aus Infrarotstrahlenüber der Scheibe 52 hat vorzugsweise eine matrixförmige Struktur in X-Richtung und in Y-Richtung einer zur Scheibe 52 parallelen X-Y-Ebene.

Auf der dem Grundsegment 18 abgewandten Oberfläche des Sensorträgerrahmens 54 sind mehrere elektrische Bauelemente angeordnet, die mit den Leiterbahnen des Sensorträgerrahmens 54 elektrisch leitend verbunden sind. Eines dieser Bauelemente ist beispielhaft mit dem Bezugszeichen 58 bezeichnet. Die elektrischen Bauelemente 58 sind derart dimensioniert, dass die den Sensorträgerrahmen 54 abgewandte Oberfläche der elektrischen Bauelemente 58 näherungsweise in einer Ebene mit der dem Grundsegment 18 abgewandten Oberfläche der Scheibe 52 liegt.

Bei einer alternativen Ausführungsform der Erfindung kann der der Öffnung 12 zugewandte Schenkel 16 und das Kontaktsegment 20 an den Stellen, an denen die Infrarotdioden 56 angeordnet sind, Aussparungen aufweisen, durch die die von den Infrarotdioden 56 ausgesandten und empfangenen Infrarotstrahlen hindurchtreten können. Bei dieser Ausführungsform muss der Rahmen 10 dann nicht unbedingt aus einem infrarotstrahlungsdurchlässigen Material gefertigt sein.

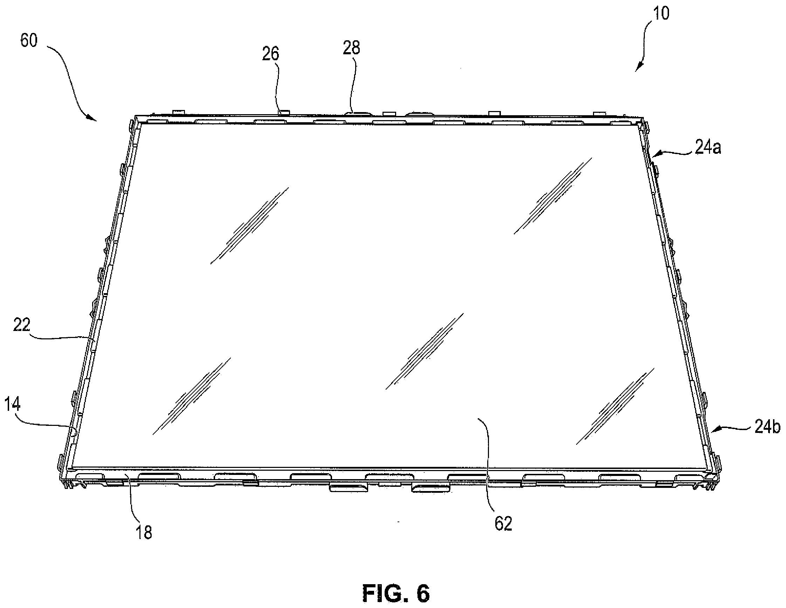

In Figur 6 ist eine schematische perspektivische Darstellung der Innenseite eines Touchmoduls 60 mit einer akustischen Sensoranordnung gemäß einer dritten Ausführungsform der Erfindung gezeigt. Die akustische Sensoranordnung umfasst eine Vielzahl von Piezoelementen, die vorzugsweise an der dem der Öffnung 12 abgewandten Schenkel 14 zugewandten Seite einer Scheibe 62 angeordnet sind. Bei einer Berührung der Berührungsoberfläche der Scheibe 62 durch einen Benutzer werden Schallwellen erzeugt, die über die Piezoelemente erfasst werden. In Abhängigkeit von der Stärke der von einzelnen Piezoelementen erfassten Schallwellen und/oder in Abgängigkeit von der Zeit die zwischen der Berührung der Scheibe 62 und dem erfassen der Schallwelle durch die Piezoelemente vergeht, kann die Position der Berührung der Scheibe 62 ermittelt werden. Die Scheibe 62 ist derart angeordnet, dass sie mit ihrer Berührungsoberfläche zumindest die Kontaktsegmente 20 des Rahmens 10 kontaktiert. Die Piezoelemente liegen somit geschützt zwischen der Scheibe 62 und dem der Öffnung 12 abgewandten Schenkel 14 des Rahmens 10.

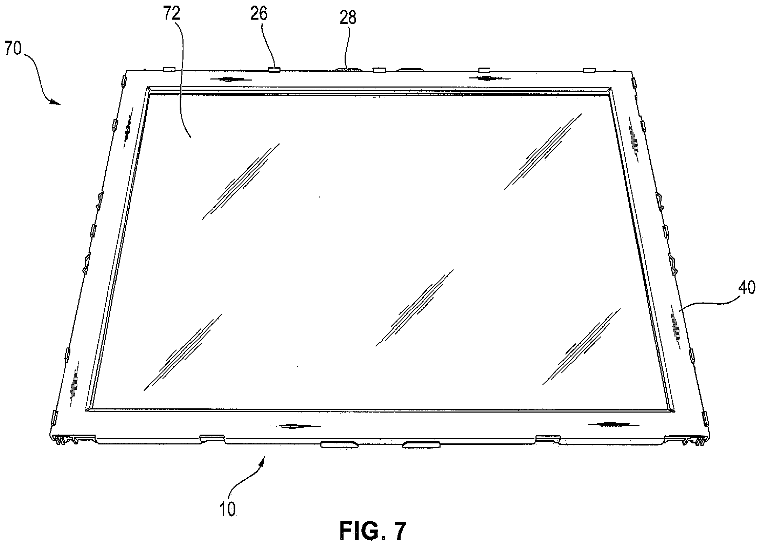

In Figur 7 ist eine schematische perspektivische Darstellung der Innenseite eines Touchmoduls 70 mit einer Dichtung 40 gemäß der Erfindung gezeigt. Innerhalb des Rahmens 10 ist eine Scheibe 72 derart angeordnet, dass die Öffnung 12 vollständig von der Scheibe 72 bedeckt und die Scheibe 72 zumindest von dem Kontaktsegment 20 des Rahmens 10 kontaktiert wird. Auf der Innenseite des Touchmoduls 70 ist eine Dichtung 40 angeordnet. Die Dichtung 40 kontaktiert zumindest die Innenseite der Scheibe 72 und das dem Grundsegment 18 abgewandte Ende des der Öffnung 12 abgewandten Schenkels 14. Mit Hilfe der Dichtung 40 wird die Nut des Rahmens 10 und die innerhalb dieser Nut bzw. der an der dem der Öffnung 12 abgewandten Schenkel 14 zugewandten Seite der Scheibe 72 angeordneten Teil einer Sensoranordnung zumindest staub- und/oder feuchtigkeitsdicht verschlossen. Die Dichtung 40 ist über die kleinen Klemmelemente 26 fest mit dem Rahmen 10 des Touchmoduls 70 verbunden. Auf diese Weise wird erreicht, dass die Dichtung 40 zusammen mit dem Touchmodul 70 auf einfache Art und Weise handhabbar ist.

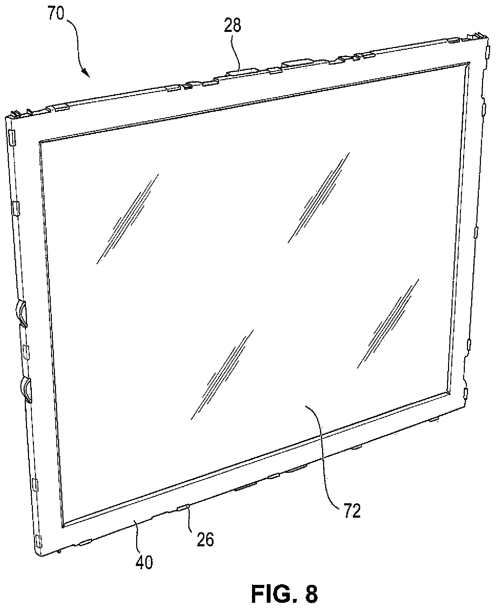

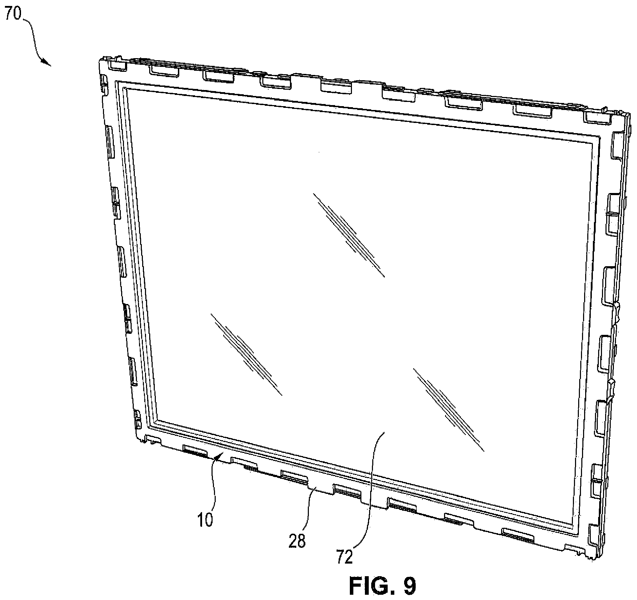

In Figur 8 ist eine weitere perspektivische schematische Darstellung der Innenseite des Touchmoduls 70 nach Figur 7 gezeigt. In Figur 9 ist eine schematische perspektivische Darstellung der Außenseite des Touchmoduls 70 nach den Figuren 7 und 8 gezeigt. Im eingebauten Zustand sind für den Benutzer von dem Touchmodul 70 lediglich die Berührungsoberfläche der Scheibe 72 und zumindest ein Teil des Rahmens 10 sichtbar.

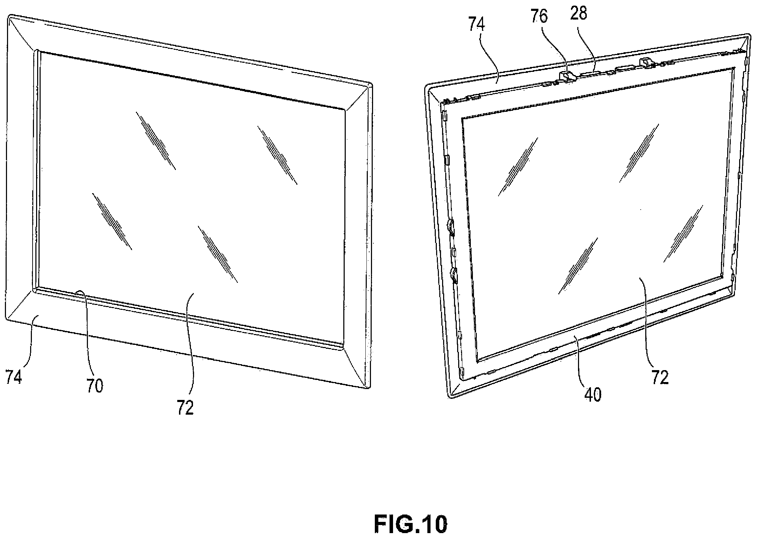

In Figur 10 ist eine schematische perspektivische Darstellung der Innenseite und der Außenseite des Touchmoduls 70 nach den Figuren 7 bis 9 und eine mit dem Touchmodul 70 verbundene Frontblende 74 gezeigt. Im linken Teil der Figur 10 ist eine Sicht auf die Außenseite des Touchmoduls 70 und in der rechten Figur von Figur 10 eine Sicht auf die Innenseite des Touchmoduls 70 gezeigt. Die Frontblende 74 ist an der Außenseite des Touchmoduls 70 derart angeordnet, dass die Außenseite des Rahmens 10 nahezu vollständig von der Frontblende 74 verdeckt wird. Die Position der Frontblende 74 zu dem Touchmodul 70 wird über mehrere an der dem Touchmodul 70 zugewandten Seite der Frontblende 74 angeordnete Positionierelemente festgelegt. Eines dieser Positionierelemente ist beispielhaft mit dem Bezugszeichen 76 bezeichnet.

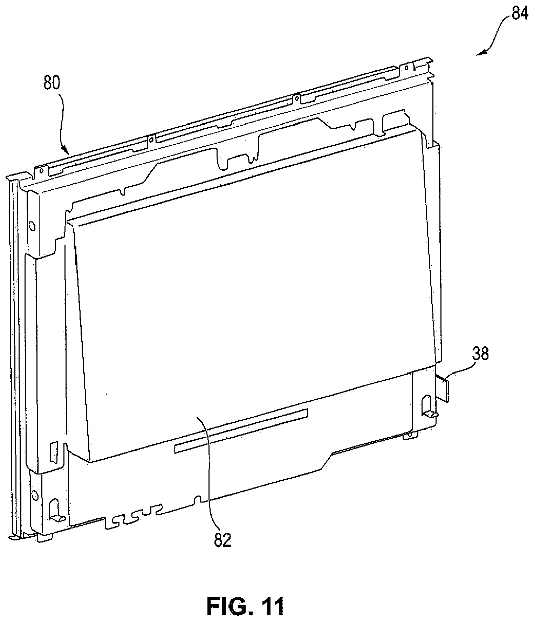

In Figur 11 ist eine schematische perspektivische Darstellung eines Touchmoduls 80 und einer fest mit dem Touchmodul 80 verbundenen Anzeigeeinheit 82 gemäß der Erfindung gezeigt. Die Anzeigeeinheit 82 ist derart an der Innenseite des Touchmoduls 80 angeordnet, dass ein in Figur 11 nicht sichtbarer Bildschirm der Anzeigeeinheit 82 derart angeordnet ist, dass er an der der Berührungsoberfläche entgegengesetzten Oberfläche einer Scheibe des Touchmoduls 80 angeordnet ist. Mit Hilfe der Dichtung 40 wird ein zwischen dem Rahmen 10 des Touchmoduls 80 und der Anzeigeeinheit 82 verbleibender Spalt verschlossen. Bei der Anzeigeeinheit 82 handelt es sich vorteilhafterweise um ein Display, insbesondere ein LCD-Display, wie beispielweise ein TFT-Display. Das Touchmodul 80 und die Anzeigeeinheit 82 bilden zusammen einen sogenannten Touchscreen 84.

Solche Touchscreens 84 können zum Einen als alleinstehende Geräte, z.B. auf oder neben einem Selbstbedienterminal oder einer Registrierkasse, verwendet werden. Solche alleinstehenden Touchscreengeräte werden auch als stand-alone-Touchscreens bezeichnet. Bei einem alleinstehenden Touchscreengerätes wird ein Touchmodul 80 in die Frontblende 74 des Touchscreens 84 integriert.

Im Fall der Integration des Touchscreens 84 in das Gehäuse eines Selbstbedienterminals, wie beispielsweise in das Gehäuse eines Geldautomaten, wird das Touchmodul 80 mit dem Display 82 verbunden. Die Blende für den Touchscreen 84 wird in diesem Fall von dem Gehäuse des Selbstbedienterminals gebildet, das eine Aussparung für den Touchscreen 84 aufweist. Bei der Integration des Touchscreens 84 in ein Selbstbedienterminal wird ein Displaymodul 82 verwendet, das kein Gehäuse aufweist. Ein solches Displaymodul 82 wird auch als Barebone-Displaymodul bezeichnet.

Bei einer alternativen Ausführungsform der Erfindung kann als Sensoranordnung eine resistive Sensoranordnung verwendet werden.

### Bezugszeichenliste

- 10: Rahmen
- 12: Öffnung
- 14, 16: Schenkel
- 18: Grundsegment
- 20: Kontaktsegment
- 22: Erhebung
- 24a, 24b: Aussparung
- 26: kleines Klemmelement
- 28: großes Klemmelement
- 30, 50, 60, 70, 80: Touchmodul
- 32, 52, 62, 72: Scheibe
- 34, 36: Positionierelement
- 38: Anschlusselement
- 40: Dichtung
- 54: Sensorträgerrahmen
- 56: Infrarotdiode
- 58: elektrisches Bauelement
- 74: Frontblende
- 76: Positionierelemente
- 82: Anzeigeeinheit
- 84: Touchscreen

## Patentansprüche

1. Anordnung mit einer Anzeigeeinheit, einer Frontblende und einer berührungssensitiven Eingabevorrichtung,
wobei die berührungssensitive Eingabevorrichtung (70) zwischen der Frontblende (74) und der Anzeigeeinheit (82) angeordnet ist,
wobei die berührungssensitive Eingabevorrichtung (70) eine Scheibe (32, 52, 62, 72) und eine Sensoranordnung zur Ermittlung der Position einer Berührung der Scheibe (32, 52, 62, 72) umfasst, wobei die berührungssensitive Eingabevorrichtung (70) einen eine Öffnung (12) aufweisenden Rahmen (10) umfasst, wobei der Rahmen (10) ein Profil mit einem der Öffnung (12) zugewandten Schenkel (16), einem der Öffnung (12) abgewandten Schenkel (14) und einem die beiden Schenkel (14, 16) verbindendem Grundsegment (18) hat,
wobei die Scheibe (32, 52, 62, 72) den der Öffnung (12) zugewandten Schenkel (16) des Profils kontaktiert,
wobei zumindest ein Teil der Sensoranordnung innerhalb einer durch den der Öffnung (12) zugewandten Schenkel (16), den der Öffnung (12) abgewandten Schenkel (14) und das Grundsegment (18) ausgebildeten nutförmigen Vertiefung angeordnet ist,
wobei innerhalb der nutförmigen Vertiefung des Rahmens (10) mehrere Erhebungen (22) ausgebildet sind, mit deren Hilfe die Scheibe (32, 52, 62, 72) und/oder die Sensoranordnung auf Abstand zum Grundsegment (18) gehalten werden,
**dadurch gekennzeichnet, dass** die Anordnung eine Dichtung (40) umfasst, die zumindest die Scheibe ( 32, 52, 62, 72) und den der Öffnung abgewandten Schenkel (14) kontaktiert und die Öffnung der Vertiefung zumindest staubund/oder feuchtigkeitsdicht verschließt, dass die Frontblende (74) an der Außenseite der berührungssensitiven Eingabevorrichtung derart angeordnet ist, dass die Außenseite des Rahmens (10) nahezu vollständig von der Frontblende (74) verdeckt wird und die Position der Frontblende (74) zu der berührungssensitiven Eingabevorrichtung über mehrere an der der berührungssensitiven Eingabevorrichtung zugewandten Seite der Frontblende angeordnete Positionierelemente (76) festgelegt wird, und
dass die Anzeigeeinheit (82) derart an der Innenseite der berührungssensitiven Eingabevorrichtung angeordnet ist, dass ein Bildschirm der Anzeigeeinheit derart angeordnet ist, dass er an der der Berührungsoberfläche entgegengesetzten Oberfläche der Scheibe angeordnet ist und mit Hilfe der Dichtung (40) ein zwischen dem Rahmen (10) und der Anzeigeeinheit (82) verbleibender Spalt verschlossen wird.

2. Anordnung nach Anspruch 1, **dadurch gekennzeichnet, dass** der Rahmen (10) der berührungssensitiven Eingabevorrichtung (70) umlaufend ist.

3. Anordnung nach einem der vorhergehenden Ansprüche, **dadurch gekennzeichnet, dass** zwischen dem der Öffnung (12) zugewandten Schenkel (16) und dem Grundsegment (18) des Rahmens (10) ein stumpfer Winkel ist.

4. Anordnung nach einem der vorhergehenden Ansprüche, **dadurch gekennzeichnet, dass** der der Öffnung (12) zugewandte Schenkel (16) kürzer ist als der der Öffnung (12) abgewandte Schenkel (14), und dass an dem dem Grundsegment (18) entgegengesetzten Ende des der Öffnung (12) zugewandten Schenkels (16) ein parallel zum Grundsegment (18) angeordnetes Kontaktsegment (20) vorgesehen ist, das die Scheibe (32, 52, 62, 72) kontaktiert.

5. Anordnung nach einem der vorhergehenden Ansprüche, **dadurch gekennzeichnet, dass** die Sensoranordnung mindestens eine Infrarotsensoranordnung umfasst, und dass zumindest ein Teil der von mindestens einem Infrarotlichtsender der Infrarotsensoranordnung ausgesandten und von mindestens einem Infrarotlichtempfänger der Infrarotsensoranordnung empfangenen Infrarotstrahlen bei Berührung einer Berührungsoberfläche der Scheibe (52) unterbrochen wird.

6. Anordnung nach einem der vorhergehenden Ansprüche, **dadurch gekennzeichnet, dass** die Sensoranordnung eine Vielzahl von Infrarotsensorelementen umfasst, und dass die Infrarotsensorelemente auf einem Sensorträgerrahmen (54) angeordnet sind und zumindest die Infrarotsensorelemente innerhalb der Vertiefung des Rahmens (10) angeordnet sind.

7. Anordnung nach Anspruch 6, **dadurch gekennzeichnet, dass** der Sensorträgerrahmen (54) zwischen dem der Öffnung (12) abgewandten Schenkel (14) des Rahmens (10) und der Scheibe (52) angeordnet ist.

8. Anordnung nach einem der vorhergehenden Ansprüche, **dadurch gekennzeichnet, dass** zumindest der der Öffnung (12) zugewandte Schenkel (16) des Rahmens (10), vorzugsweise der gesamte Rahmen (10), aus einem infrarotstrahlungsdurchlässigen Material, insbesondere einem infrarotstrahlungsdurchlässigen Kunststoff, gefertigt ist.

9. Anordnung nach einem der Ansprüche 1 bis 4,
**dadurch gekennzeichnet, dass** die Sensoranordnung mindestens ein Piezoelement zum Erfassen von durch eine Berührung der Scheibe (62) erzeugten Schallwellen umfasst.

10. Anordnung nach Anspruch 9, **dadurch gekennzeichnet, dass** eine Vielzahl von Piezoelementen vorgesehen ist und die Piezoelemente an den dem der Öffnung (12) abgewandten Schenkel (14) zugewandten Seiten der Scheibe (62) angeordnet sind.

11. Anordnung nach einem der Ansprüche 1 bis 4,
**dadurch gekennzeichnet, dass** die Sensoranordnung mehrere auf der Scheibe (32) aufgedampfte Elektroden oder eine Metalloxidschicht hat, die bei Berührung einer Berührungsoberfläche der Scheibe (32) ein elektrisches Signal aussenden bzw. aussendet.

12. Anordnung nach einem der Ansprüche 1 bis 4,
**dadurch gekennzeichnet, dass** der Rahmen zur Anordnung von verschiedenen Sensoranordnungen und von Scheiben mit unterschiedlichen Abmessungen geeignet ist, wobei innerhalb der Vertiefung des Rahmens (10) zumindest auf einem Sensorträgerrahmen (54) angeordnete Infrarotsensorelemente angeordnet sind oder mindestens ein Piezoelement zwischen dem der Öffnung (12) abgewandten Schenkel (14) des Rahmens (10) und der diesem Schenkel (14) zugewandten Seite der Scheibe (32, 52, 62, 72) angeordnet ist oder auf der Scheibe (32, 52, 62, 72) Elektroden aufgedampft sind und die Scheibe derart angeordnet ist, dass die Scheibe (32, 52, 62, 72) zumindest den der Öffnung (12) zugewandten Schenkel (16) kontaktiert.

13. Anordnung nach einem der vorhergehenden Ansprüche, **dadurch gekennzeichnet, dass** der Rahmen (10) mindestens ein weiteres Positionierelement (34, 36) zur Positionierung und/oder Befestigung der Scheibe (32, 52, 62, 72) umfasst.

## Claims

1. Assembly having a display unit, a front bezel and a touch-sensitive input device,
the touch-sensitive input device (70) being arranged between the front bezel (74) and the display unit (82),
the touch-sensitive input device (70) comprising a glass pane (32, 52, 62, 72) and a sensor assembly for determining the position of a touch on the glass pane (32, 52, 62, 72),
the touch-sensitive input device (70) comprising a frame (10) having an opening (12), the frame (10) having a profile with a limb (16) facing the opening (12), a limb (14) facing away from the opening (12) and a base segment (18) connecting the two limbs (14, 16),
the glass pane (32, 52, 62, 72) making contact with the limb (16) of the profile that faces the opening (12),
at least part of the sensor assembly being arranged within a groove-like depression formed by the limb (16) facing the opening (12), the limb (14) facing away from the opening (12) and the base segment (18),
multiple elevations (22) being formed within the groove-like depression of the frame (10), with the aid of which the glass pane (32, 52, 62, 72) and/or the sensor assembly are held at a distance from the base segment (18),
**characterized**
**in that** the assembly comprises a seal (40), which makes contact at least with the glass pane (32, 52, 62, 72) and the limb (14) facing away from the opening and closing the opening of the depression at least in a dust-tight and/or moisture-tight manner,
**in that** the front bezel (74) is arranged on the outside of the touch-sensitive input device in such a way that the outside of the frame (10) is virtually completely hidden by the front bezel (74), and the position of the front bezel (74) relative to the touch-sensitive input device is defined by a plurality of positioning elements (76) arranged on the side of the front bezel that faces the touch-sensitive input device, and
**in that** the display unit (82) is arranged on the inner side of the touch-sensitive input device in such a way that a screen of the display unit is arranged in such a way that it is arranged on the surface of the glass pane that is opposite to the touch surface, and a gap remaining between the frame (10) and the display unit (82) is closed with the aid of the seal (40).

2. Assembly according to Claim 1, **characterized in that** the frame (10) of the touch-sensitive input device (70) is circumferential.

3. Assembly according to one of the preceding claims, **characterized in that** there is an obtuse angle between the limb (16) facing the opening (12) and the base segment (18) of the frame (10).

4. Assembly according to one of the preceding claims, **characterized in that** the limb (16) facing the opening (12) is shorter than the limb (14) facing away from the opening (12), and **in that** on that end facing the base segment (18) of the limb (16) which faces the opening (12) there is provided a contact segment (20) which is arranged parallel to the base segment (18) and makes contact with the glass pane (32, 52, 62, 72).

5. Assembly according to one of the preceding claims, **characterized in that** the sensor assembly comprises at least one infrared sensor assembly, and **in that** at least some of the infrared rays that are emitted by at least one infrared light transmitter of the infrared sensor assembly and received by at least one infrared light receiver of the infrared sensor assembly are interrupted when a contact surface of the glass plane (52) is touched.

6. Assembly according to one of the preceding claims, **characterized in that** the sensor assembly comprises a multiplicity of infrared sensor elements, and **in that** the infrared sensor elements are arranged on a sensor carrier frame (54), and at least the infrared sensor elements are arranged within the depression in the frame (10).

7. Assembly according to Claim 6, **characterized in that** the sensor carrier frame (54) is arranged between that limb (14) of the frame (10) which faces away from the opening (12) and the glass pane (52).

8. Assembly according to one of the preceding claims, **characterized in that** at least that limb (16) of the frame (10) which faces the opening (12), preferably the entire frame (10), is made of a material that is transparent to infrared radiation, in particular a plastic that is transparent to infrared radiation.

9. Assembly according to one of Claims 1 to 4, **characterized in that** the sensor assembly comprises at least one piezoelectric element for detecting sound waves generated by touching the glass pane (62).

10. Assembly according to Claim 9, **characterized in that** a multiplicity of piezoelectric elements are provided, and the piezoelectric elements are arranged on the sides of the glass plane (62) that face the limb (14) facing away from the opening (12) .

11. Assembly according to one of Claims 1 to 4, **characterized in that** the sensor arrangement has a plurality of electrodes vapour-deposited onto the glass pane (32) or a metal oxide layer which, when a contact surface of the glass pane (32) is touched, transmit or transmits an electric signal.

12. Assembly according to one of Claims 1 to 4, **characterized in that** the frame is suitable for the arrangement of various sensor assemblies and of glass panes with different dimensions, at least infrared sensor elements arranged on a sensor carrier frame (54) being arranged within the depression of the frame (10), or at least one piezoelectric element being arranged between that limb (14) of the frame (10) which faces the opening (12) and the side of the glass pane (32, 52, 62, 72) that faces this limb (14), or electrodes being vapour-deposited on the glass pane (32, 52, 62, 72) and the glass pane being arranged in such a way that the glass pane (32, 52, 62, 72) makes contact at least with the limb (16) that faces the opening (12).

13. Assembly according to one of the preceding claims, **characterized in that** the frame (10) comprises at least one further positioning element (34, 36) for positioning and/or fixing the glass pane (32, 52, 62, 72) .

## Revendications

1. Arrangement comprenant une unité d'affichage, un panneau avant et un dispositif de saisie tactile,
le dispositif de saisie tactile (70) étant disposé entre le panneau avant (74) et l'unité d'affichage (82),
le dispositif de saisie tactile (70) comportant une vitre (32, 52, 62, 72) et un arrangement de détection destiné à déterminer la position d'un toucher de la vitre (32, 52, 62, 72),
le dispositif de saisie tactile (70) comportant un cadre (10) qui possède une ouverture (12), le cadre (10) ayant un profil avec une branche (16) qui fait face à l'ouverture (12), une branche (14) l'opposé de l'ouverture (12) et un segment de base (18) qui relie les deux branches (14, 16),
la vitre (32, 52, 62, 72) étant en contact avec la branche (16) qui fait face à l'ouverture (12),
au moins une partie de l'arrangement de détection étant disposée à l'intérieur d'un enfoncement en forme de rainure formé par la branche (16) qui fait face à l'ouverture (12), la branche (14) à l'opposé de l'ouverture (12) et le segment de base (18),
plusieurs bossages (22) étant formés à l'intérieur de l'enfoncement en forme de rainure du cadre (10), à l'aide desquels la vitre (32, 52, 62, 72) et/ou l'arrangement de détection sont maintenus à une distance donnée du segment de base (18),
**caractérisé en ce que**
l'arrangement comporte une garniture d'étanchéité (40),
qui est en contact au moins avec la vitre (32, 52, 62, 72) et la branche (14) l'opposé de l'ouverture et ferme l'ouverture de l'enfoncement au moins de manière étanche à la poussière et/ou à l'humidité,
**en ce que** le panneau avant (74) est disposé au niveau du côté extérieur du dispositif de saisie tactile de telle sorte que le côté extérieur du cadre (10) est presque entièrement recouvert par le panneau avant (74) et la position du dispositif de saisie tactile par rapport au dispositif de saisie tactile est fixée par le biais de plusieurs éléments de positionnement (76) disposé sur le côté du panneau avant qui fait face au dispositif de saisie tactile, et
**en ce que** l'unité d'affichage (82) est disposée au niveau du côté intérieur du dispositif de saisie tactile de telle sorte qu'un écran d'affichage de l'unité d'affichage est disposé de telle sorte qu'il est disposé au niveau de la surface de la vitre qui se trouve à l'opposé de la surface tactile et un interstice restant entre le cadre (10) et l'unité d'affichage (82) est fermé à l'aide de la garniture d'étanchéité (40).

2. Arrangement selon la revendication 1, **caractérisé en ce que** le cadre (10) du dispositif de saisie tactile (70) est circonférentiel.

3. Arrangement selon l'une des revendications précédentes, **caractérisé en ce qu'**un angle obtus se trouve entre la branche (16) qui fait face à l'ouverture (12) et le segment de base (18) du cadre (10).

4. Arrangement selon l'une des revendications précédentes, **caractérisé en ce que** la branche (16) qui fait face à l'ouverture (12) est plus courte que la branche (14) à l'opposé de l'ouverture (12) et **en ce qu'**à l'extrémité de la branche (16) qui fait face à l'ouverture (12) qui se trouve à l'opposé du segment de base (18) se trouve un segment de contact (20) disposé parallèlement au segment de base (18), lequel est en contact avec la vitre (32, 52, 62, 72).

5. Arrangement selon l'une des revendications précédentes, **caractérisé en ce que** l'arrangement de détection comporte au moins un arrangement de détection d'infrarouges, et **en ce qu'**au moins une partie du rayonnement infrarouge, émis par au moins un émetteur d'infrarouge de l'arrangement de détection d'infrarouges et reçu par au moins un récepteur de lumière infrarouge de l'arrangement de détection d'infrarouges est interrompu en cas de toucher d'une surface tactile de la vitre (52).

6. Arrangement selon l'une des revendications précédentes, **caractérisé en ce que** l'arrangement de détection comporte une pluralité d'éléments de détection d'infrarouge, et **en ce que** les éléments de détection d'infrarouge sont disposés sur un cadre porte-détecteurs (54) et au moins les éléments de détection d'infrarouge sont disposés à l'intérieur de l'enfoncement du cadre (10) .

7. Arrangement selon la revendication 6, **caractérisé en ce que** le cadre porte-détecteurs (54) est disposé entre la branche (14) du cadre (10) à l'opposé de l'ouverture (12) et la vitre (52).

8. Arrangement selon l'une des revendications précédentes, **caractérisé en ce qu'**au moins la branche (16) du cadre (10) qui fait face à l'ouverture (12), de préférence la totalité du cadre (10), est fabriquée dans un matériau transparent au rayonnement infrarouge, notamment une matière plastique transparente au rayonnement infrarouge.

9. Arrangement selon l'une des revendications 1 à 4, **caractérisé en ce que** l'arrangement de détection comporte au moins un élément piézoélectrique destiné à détecter des ondes sonores générées par un toucher de la vitre (62).

10. Arrangement selon la revendication 9, **caractérisé en ce qu'**une pluralité d'éléments piézoélectriques sont présents et les éléments piézoélectriques sont disposés au niveau des côtés de la vitre (62) qui font face à la branche (14) à l'opposé de l'ouverture (12).

11. Arrangement selon l'une des revendications 1 à 4, **caractérisé en ce que** l'arrangement de détection comprend plusieurs électrodes ou une couche d'oxyde métallique appliquée par métallisation sous vide sur la vitre (32), lesquelles émettent un signal électrique lors du toucher d'une surface tactile de la vitre (32).

12. Arrangement selon l'une des revendications 1 à 4, **caractérisé en ce que** le cadre est conçu pour l'arrangement de différents arrangements de détection et de vitres ayant des dimensions différentes, des éléments de détection d'infrarouge étant disposé à l'intérieur de l'enfoncement du cadre (10) au moins sur un cadre porte-détecteurs (54) ou au moins un élément piézoélectrique étant disposé entre la branche (14) du cadre (10) à l'opposé de l'ouverture (12) et le côté de la vitre (32, 52, 62, 72) à l'opposé de cette branche (14) ou des électrodes étant appliquées sur la vitre (32, 52, 62, 72) par métallisation sur vide et la vitre étant disposée de telle sorte que la vitre (32, 52, 62, 72) est en contact avec au moins la branche (16) qui fait face à l'ouverture (12) .

13. Arrangement selon l'une des revendications précédentes, **caractérisé en ce que** le cadre (10) comporte au moins un élément de positionnement (34, 36) supplémentaire servant au positionnement et/ou à la fixation de la vitre (32, 52, 62, 72).
